# EUROPÄISCHE PATENTSCHRIFT

(11) **EP 4 343 181 B1**
(45) Veröffentlichungstag und Bekanntmachung des Hinweises auf die Patenterteilung: **23.04.2025**
(21) Anmeldenummer: 22197439.7
(22) Anmeldetag: 23.09.2022
(51) Int. Cl.: F16K 1/22, F16K 27/02

(54) **ABSPERRKLAPPENGEHÄUSE**
BUTTERFLY VALVE HOUSING
BOÎTIER DE CLAPET D'ARRÊT

(43) Veröffentlichungstag der Anmeldung: 27.03.2024
(73) Patentinhaber: Georg Fischer Rohrleitungssysteme AG, 8201 Schaffhausen (CH)
(72) Erfinder: Buergi, Stefan, 8254 Basadingen (CH); Ernst, Alexander, 8240 Thayngen (CH); Jaeckle, Timo, 78247 Hilzingen (DE); Mayer, Lars, 78224 Singen (DE); Wasetzki, Maxim, 78224 Singen (DE)
(74) Vertreter: Fenner, Seraina

(56) Entgegenhaltungen:
- WO-A1-99/35426
- JP-A- 2000 028 006
- US-A1- 2005 029 477

## Beschreibung

Die Erfindung betrifft ein Absperrklappengehäuse für eine Absperrklappe mit einem drehbar im Gehäuse gelagerten Schliesselement, beinhaltend ein einteilig ausgebildetes Gehäuse aus Kunststoff, wobei das Gehäuse einen Ringkörper, zwei stirnseitig angeordnete Flanschanschlussscheiben und eine Verstärkungsstruktur aufweist, wobei der Ringkörper einen, eine Dichtpartie bildenden Innendurchmesser und einen Aussendurchmesser aufweist, wobei der Aussendurchmesser des Ringkörpers kleiner ist als der Aussendurchmesser der Flanschanschlussscheiben, wobei die Verstärkungsstruktur am Aussenumfang des Ringkörpers und zwischen den beiden Flanschanschlussscheiben angeordnet ist, und metallische Einsätze, wobei die Einsätze zwischen den Flanschanschlussscheiben entlang des Aussenumfangs des Ringkörpers angeordnet sind.

Im Rohrleitungsbau werden Absperrklappen mit Absperrklappengehäusen eingesetzt um Rohrleitungen, die flüssige oder gasförmige Medien transportieren zu schliessen bzw. den Durchfluss zu regeln. Absperrklappen, die zwischen zwei Rohrflansche eingebaut werden, werden als "WAFER Typ" bezeichnet. Bei diesem Typ wird das Absperrklappengehäuse zwischen die beiden Rohrflansche geklemmt, welche mit mehreren durchgehenden Schrauben zusammengespannt werden.

Bei Absperrklappen, die als Anflanschausführung ausgebildet sind, weist das Gehäuse zum direkten Anschrauben des Rohrleitungsflansch Gewindelöcher auf. Eine solche Ausführungsform wird meist als Endeinbau eingesetzt und als "LUG Typ" bezeichnet. Bei kurzen Baulängen werden dazu meist metallische Absperrklappen eingesetzt bei denen direkt Gewindeflanschlöcher am Gehäuse eingebracht sind und der Rohrleitungsflansch an denen dann festgeschraubt wird.

Bei Kunststoffausführungen werden dazu meist in das Gehäuse Metalleinsätze hintergespritzt, die ein Innengewinde aufweisen mit dem der Rohrleitungsflansch dann verschraubt werden kann. Nachteilig hierbei ist, dass eine solche Absperrklappe dann ausschliesslich als Endeinbau verwendet werden kann da die Gewindelöcher meist nur einseitig als Sacklöcher ausgebildet und nur einseitig zugänglich sind. So muss die Absperrklappe bei einer Weiterführung der Rohrleitung also ersetzt werden durch beispielsweise eine "WAFER Typ".

Die JP 2000028006 A2 offenbart eine Absperrklappe als "WAFER Typ" ausgebildet ist und somit sind die Rohrleitungsflansche nicht direkt am Gehäuse anschraubbar sondern das Gehäuse wird hier zwischen die Rohrleitungsflansche geklemmt.

Aus der WO 99/35426 A1 wird eine weitere Absperklappe bekannt

Es ist Aufgabe der Erfindung ein Absperrklappengehäuse aus Kunststoff vorzuschlagen, das als Zwischeneinbau- wie auch als Endeinbauausführung eingesetzt werden kann und das als "LUG-Typ"-Bauform ausgebildet ist, wie auch, dass die Absperrklappe beidseitig montierbar ist, damit kein Einbaufehler entstehen kann.

Diese Aufgabe wird erfindungsgemäss dadurch gelöst, dass im Gehäuse zwischen den beiden Flanschanschlussscheiben und zwischen der Verstärkungsstruktur Aufnahmeöffnungen angeordnet sind, wobei die Aufnahmeöffnungen vom Aussenumfang Richtung vertikale Mittelachse gerichtet sind bzw. verlaufen, in die die Einsätze ins Gehäuse einsetzbar sind, wobei die Einsätze in den Aufnahmeöffnungen formschlüssig angeordnet sind.

Das erfindungsgemässe Absperrklappengehäuse für eine Absperrklappe mit einem drehbar im Gehäuse gelagerten Schliesselement, beinhaltet ein einteilig ausgebildetes Gehäuse aus Kunststoff. Das Gehäuse weist einen Ringkörper, zwei stirnseitig angeordnete Flanschanschlussscheiben und eine Verstärkungsstruktur auf. Der Ringkörper weist einen, eine Dichtpartie bildenden Innendurchmesser auf, über den das Schliesselement in geschlossener Stellung die Absperrklappe mit Hilfe einer dazwischenliegenden Manschette dicht verschliesst. Am Aussendurchmesser bzw. Aussenumfang des Ringkörpers schliesst die Verstärkungsstruktur des Gehäuses an, was ein stabiles aber dennoch leichtes und dünnwandiges Gehäuse erlaubt. Die Verstärkungsstruktur ist am Aussendurchmesser des Ringkörpers und zwischen den stirnseitigen Flanschanschlussscheiben angeordnet, welche den Aussendurchmesser des Ringköpers überragen. Dadurch weist das Gehäuse am Aussenumfang eine Verstärkungsstruktur auf, die sich vorzugsweise durch eine Verrippung entlang des Aussenumfangs bildet. Das Absperrklappengehäuse 34691SF_Anmeldung beinhaltet metallische Einsätze, wobei die Einsätze zwischen den Flanschanschlussscheiben entlang des Aussenumgangs des Ringkörpers angeordnet sind. Zur Aufnahme der Einsätze im Gehäuse sind zwischen den beiden Flanschanschlussscheiben und zwischen der Verstärkungsstruktur Aufnahmeöffnungen angeordnet. Die Aufnahmeöffnungen verlaufen bzw. erstrecken sich vom Aussenumfang bzw. Aussendurchmesser des Gehäuses bzw. der Verstärkungsstruktur in Richtung vertikale Mittelachse, wobei die Aufnahmeöffnungen in axiale Richtung des Gehäuses durch die Flanschanschlussscheiben begrenzt sind. Die Einsätze sind über den Aussenumfang bzw. Aussendurchmesser des Gehäuses in die Aufnahmeöffnung einsetzbar . Die Aufnahmeöffnungen sind derart ausgebildet, dass die Aufnahmeöffnungen in Richtung Aussenumfang geöffnet sind und von den beiden Flanschanschlussscheiben jeweils axial und nach oben und unten durch die Verstärkungsstruktur begrenzt werden. Vorzugsweise bildet die Verstärkungsstruktur eine Begrenzung der Aufnahmeöffnungen entlang des Aussenumfangs zwischen den Aufnahmeöffnungen. Die Einsätze in den Aufnahmeöffnungen sind formschlüssig angeordnet und sind ausschliesslich über den Aussenumfang in die Aufnahmeöffnung einsetzbar.

Als vorteilhaft hat sich gezeigt, wenn der Verlauf der Aufnahmeöffnungen rechtwinklig zur vertikalen Mittelachse ausgebildet ist, dies hat den Vorteil, dass sich das Gehäuse m Spritzgussverfahren einfacher herstellen lässt. Die Aufnahmeöffnung erstreckt sich dann vom Aussenumfang des Gehäuses bzw. der am Verstärkungsstruktur welche den Aussenumfang bildet und ragt gegen die vertikale Mittelachse hinein bis hin zum Aussendurchmesser des Ringkörpers.

Als alternative Ausführungsform sind die Aufnahmeöffnungen schräg zur vertikalen Mittelachse angeordnet, speziell bevorzugt verlaufen sie radial ins Zentrum gerichtet.

Die Aufnahmeöffnungen sind vorzugsweise zur vertikalen Mittelachse hin geschlossen ausgebildet bzw. sind nicht als Durchgangsöffnungen ausgebildet, sondern bilden eine Sacköffnung bzw. eine Aufnahmetasche.

Vorzugsweise sind die Aufnahmeöffnungen als Aufnahmetaschen ausgebildet, die entlang des Gehäuseumfangs zwischen der Verstärkungsstruktur und den Flanschanschlussscheiben angeordnet sind und in denen die Einsätze formschlüssig und wiederentfernbar darin aufgenommen sind.

Als vorteilhaft hat sich gezeigt, wenn die Einsätze in den Aufnahmeöffnungen mittels Distanzelement zum Aussenumfang des Ringkörpers und zwischen der Verstärkungsstruktur positioniert sind.

Vorzugsweise sind die Einsätze beidseitig axial im Gehäuse zwischen den beiden Flanschanschlussscheiben fixiert und nicht verschiebbar angeordnet. Die Einsätze sind zudem über den Aussenumfang des Gehäuses wieder lösbar in der Aufnahmeöffnung fixiert. Das heisst, die Einsätze werden axial durch die beiden links und rechts von den Einsätzen angeordneten Flanschanschlussscheiben axial begrenzt, wodurch sie axial nicht verschiebbar sind. Durch die formschlüssige Aufnahme der Einsätze in der Aufnahmeöffnung werden die Einsätze auch in Richtung des Aussendurchmessers bzw. Aussenumfangs fixiert, wobei diese Fixierung wiederlösbar ist.

Als bevorzugte Ausführungsform hat sich gezeigt, dass in der Aufnahmeöffnung zur Fixierung des Einsatzes in der Aufnahmeöffnung ein Halteelement angeordnet ist. Dadurch wird sichergestellt, dass der Einsatz sich nicht ungewollt aus dem Gehäuse löst oder dreht.

Es ist vorteilhaft, wenn das Halteelement als flexibler Schnapphaken ausgebildet ist. Dies ermöglicht es, die Einsätze einfach im Gehäuse zu befestigen und auch wieder zu entfernen. Es wäre also auch denkbar, die Absperrklappe als "WAFER-Typ" einzusetzen bei der die Einsätze im Gehäuse entfernt und die Absperrklappe zwischen die Rohrflansche geklemmt würde. Der Schnapphaken ist bei eingebautem Einsatz leicht vorgespannt um den Einsatz gut im Gehäuse zu fixieren.

Vorzugsweise ist das Absperrklappengehäuse entlang der vertikalen Mittelachse spiegelsymmetrisch ausgebildet. Dadurch wird ermöglicht, dass die Einbaurichtung der Absperrklappe keine Rolle spielt und der Installateur muss nicht darauf achten wie herum er die Klappe anschliesst.

Als vorteilhaft hat sich gezeigt, wenn der Einsatz ein durchgehendes Innengewinde aufweist. Dadurch kann der Rohrleitungsflansch im Endeinbau oder auch als Zwischeneinbau direkt am Absperrklappengehäuse angeschraubt werden. Somit kann beim erfindungsgemässen Absperrklappengehäuse ein Rohrleitungsflansch von einer Seite oder auch von beiden Seiten direkt am Gehäuse verschraubt werden.

Als bevorzugte Ausführungsform hat sich gezeigt, wenn der Einsatz unterschiedliche Aussendurchmesser aufweist. Vorzugsweise wird die Änderung der Aussendurchmesser über Stufen bzw. Absätze im Einsatz erzielt. Dadurch ist es möglich die Flanschanschlussscheibe bei den Auflageflächen bzw. Stirnseiten der Einsätze zu verstärken, ohne dass die Länge der Einsätze beeinträchtigt wird und noch ein genügend langes Innengewinde zum Befestigen des Rohrflansches besteht auch bei schmalen Bauformen von Absperrklappen. Es ist vorteilhaft wenn der Einsatz zylinderförmig mit unterschiedlichen Aussendurchmessern aufgebaut ist, wobei die äussern Zylinder einen geringeren Durchmesser als die dazwischenliegenden Zylinder aufweisen.

Es ist vorteilhaft, dass der Einsatz eine Verdrehsicherung aufweist. Dadurch wird vermieden, dass sich der Einsatz in der Aufnahmeöffnung rotieren kann. Vorzugsweise weist der Einsatz als Verdrehsicherung am Aussenumfange eine gerade Fläche auf, die dann an einer Rippe der Verstärkungsstruktur anliegt.

Als vorteilhaft hat sich auch gezeigt, wenn an der Verstärkungsstruktur ein Steg ausgebildet ist mit dem die Verdrehsicherung am Einsatz korrespondiert.

Vorzugsweise sind die Einsätze regelmässig entlang des Aussendurchmessers des Ringkörpers angeordnet. Es ist vorteilhaft, wenn vier bis 20 Einsätze entlang des Umfangs angeordnet sind, abhängig von der Grösse bzw. des Nenndurchmessers der Absperrklappe.

Als bevorzugte Ausführungsform hat sich gezeigt, dass das Absperrklappengehäusen einbaurichtungsunabhängig und als Zwischen- und Endeinbauteil installierbar ist. Dadurch, dass an beide Stirnseiten aufgrund des durchgehenden Innengewindes in den Einsätzen und des beidseitigen Anschlags für die Einsätze an den Flanschanschlussscheiben, wodurch keine axiale Verschiebung der Einsätze möglich ist, lässt sich an beiden Stirnseiten ein Rohrflansch befestigen bei dem die Absperrklappe als Endeinbau-Bauteil verwendet wird, wie auch die Einbaurichtung nicht relevant ist und auch als Verwendung als Zwischeneinbau-Bauteil spielt die Einbaurichtung keine Rolle.

Die erfindungsgemässe Verwendung eines Absperrklappengehäuses zeichnet sich dadurch aus, dass das Absperrklappengehäuse einbaurichtungsunabhängig und bei einer Absperrklappe für den Zwischen- wie auch den Endeinbau verwendbar ist.

Neben den oben erwähnten Merkmalen, die es ermöglichen das Absperrklappengehäuse in beide Richtungen einzubauen ist es auch von Vorteil, dass das Absperrklappengehäuse entlang der vertikalen Längsachse spiegelsymmetrisch ist.

Alle Ausgestaltungmöglichkeiten sind untereinander frei kombinierbar, sowohl die Merkmale, die im Zusammenhang auf das Absperrklappengehäuse genannt sind als auch die, die im Zusammenhang mit der Verwendung des Absperrklappengehäuses genannt sind.

Ein Ausführungsbeispiel der Erfindung wird anhand der Figuren beschrieben, wobei sich die Erfindung nicht nur auf das Ausführungsbeispiel beschränkt. Es zeigen:
- Fig. 1: eine dreidimensionale Darstellung einer eingebauten Absperrklappe als Endeinbau mit erfindungsgemässem Absperrklappengehäuse,
- Fig. 2: eine dreidimensionale Darstellung eines erfindungsgemässen Absperrklappengehäuses,
- Fig. 3: einen Teilschnitt durch einen im Gehäuse eingesetzten Einsatz,
- Fig. 4: eine Teilansicht einer Aufnahmeöffnung mit einem noch nicht darin angeordneten Einsatz,
- Fig. 5: eine dreidimensionale Darstellung einer eingebauten Absperrklappe als Zwischeneinbau mit erfindungsgemässem Absperrklappengehäuse und
- Fig. 6: eine Schnittansicht des erfindungsgemässen Absperrklappengehäuses.

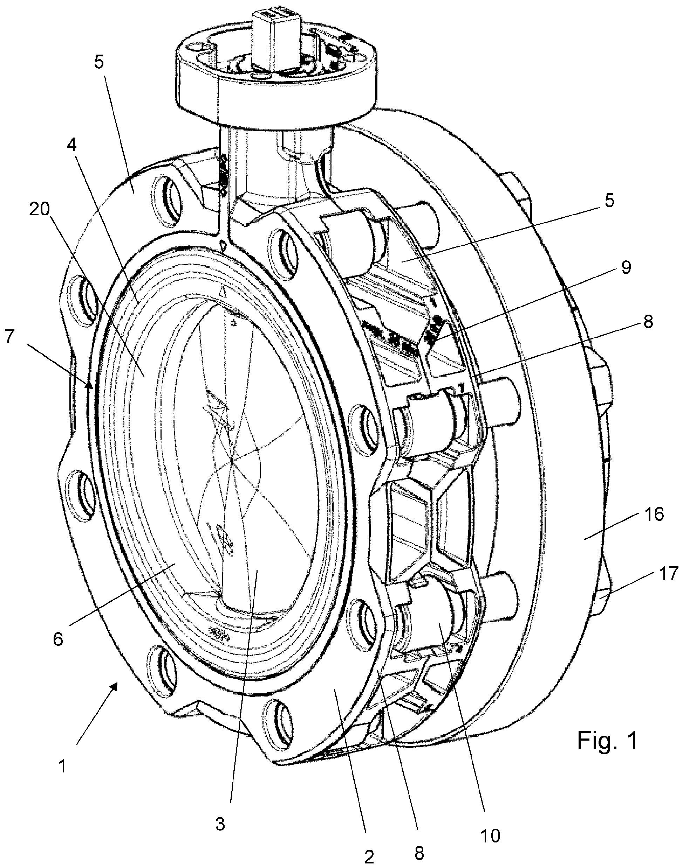

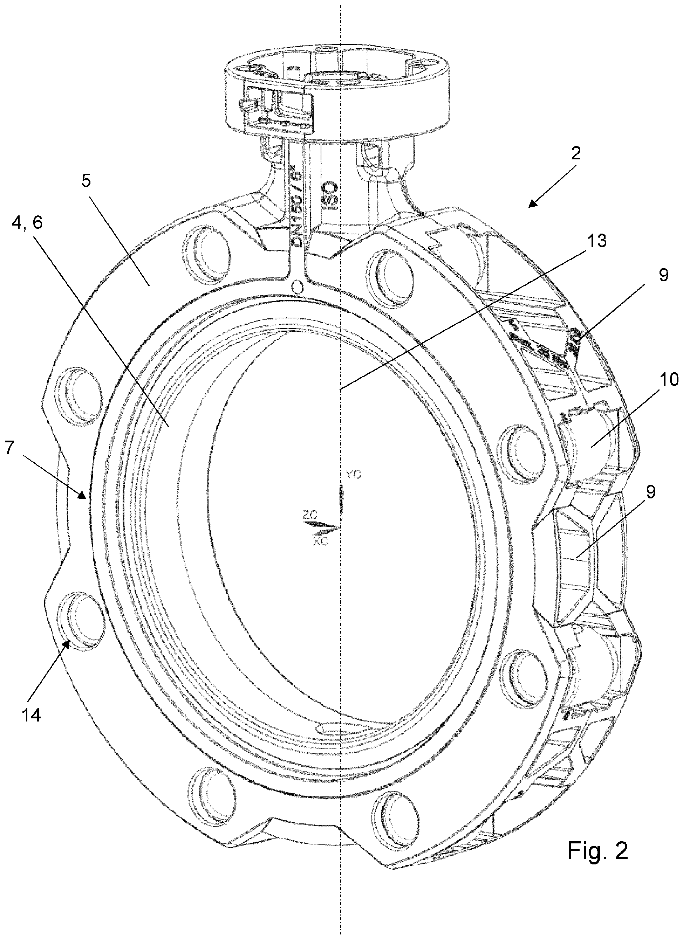

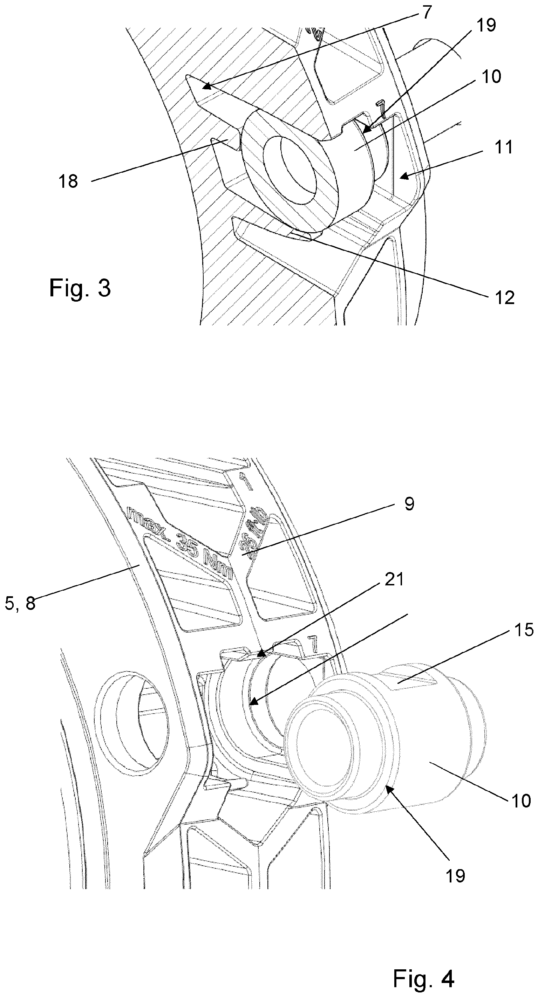

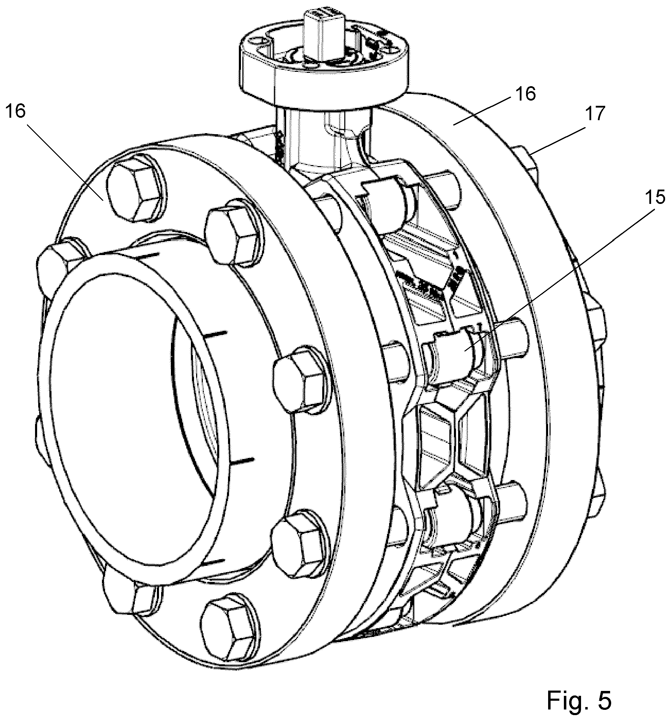

Die in Fig. 1 dargestellte Zeichnung zeigt eine dreidimensionale Ansicht einer Absperrklappe mit erfindungsgemässen Absperrklappengehäuse 1. In Fig. 1 ist das Absperrklappengehäuse 1 als Endeinbau-Bauteil eingesetzt, wobei die dargestellte Variante hauptsächlich während des reduzierten Betriebsdrucks angewandt wird, und aufgrund der für das direkte Anschrauben des Rohrleitungsflansches am Absperrklappengehäuse angeordneten Gewindebohrungen in den Einsätzen 10, als "LUG-Typ" ausgebildet. Als Endeinbau heisst, dass die Absperrklappe zum Abschliessen einer Rohrleitung eingesetzt wird. Dies bedingt, dass der Rohrflansch 16 an das Absperrklappengehäuse 1 anschraubbar ist, wie das in Fig. 1 mit den Befestigungsmitteln 17 ersichtlich ist. Das Schliesselement 3 ist im Absperrklappengehäuse 1 zusammen mit dem Innendurchmesser 6 des Ringkörpers 4 und der dazwischen angeordneten Manschette 20 abdichtend angeordnet. In Fig. 5 ist zudem die Absperrklappe mit erfindungsgemässem Absperrklappengehäuse 1 als Zwischeneinbau dargestellt. Dies ist beim erfindungsgemässen Absperrklappengehäuse 1 problemlos möglich, da die Einsätze 10 ein durchgehendes Innengewinde zum beidseitigen Festschrauben der Rohrflansche aufweisen. So muss bei einem Umbau der Rohrleitung die Absperrklappe nicht gewechselt werden, sondern es kann dieselbe Absperrklappe, die als Endeinbau verwendet wurde auch als Zwischeneinbau genutzt werden. Fig. 2 zeigt ein erfindungsgemässes Gehäuse 2 einer Absperrklappe 1. Gut ersichtlich ist das einteilige Kunststoffgehäuse 2, welches einen Ringkörper 4, zwei an den Stirnseiten angeordnete Flanschanschlussscheiben 5 und eine am Aussenumfang 7 des Ringkörpers 4 angeordnete Verstärkungsstruktur 9 aufweist. Vorzugsweise ist das Gehäuse 2 als Spritzgussteil ausgebildet. Die Verstärkungsstruktur 9 weist Verstärkungsrippen auf, so dass das Gehäuse 2 die geforderte Stabilität aufweist aber dennoch leicht ist. Der Innendurchmesser 6 des Ringkörpers 4 bildet mit Hilfe der Manschette 20 die Dichtpartie um die Absperrklappe mit dem Schliesselement 3 in geschlossener Position optimal abzudichten. In Fig. 3 ist gut ersichtlich, dass der Aussendurchmesser 7 des Ringkörpers 4 kleiner ist als der Aussendurchmesser 8 der Flanschanschlussscheiben 5. Dadurch lässt sich die Verstärkungsstruktur 9 gut am Aussenumfang 7 des Ringkörpers 4 und zwischen den Flanschanschlussscheiben 5 anordnen, um dem Gehäuse 2 eine gute Steifigkeit mit wenig Gewicht zu verleihen. Zwischen der Verstärkungsstruktur 9 und den beiden Flanschanschlussscheiben 5 sind entlang des Umfangs Aufnahmeöffnungen 11 angeordnet. Diese dienen der Aufnahme der metallischen Einsätze 10. Die metallischen Einsätze 10 sind ausschliesslich in über den Aussenumfang des Gehäuses 2 in die Aufnahmeöffnungen 11 am Gehäuse 2 einsetzbar, dies wird durch Fig. 4 gezeigt. Die metallischen Einsätze 10, wobei sie aus jeglichen metallischen Werkstoffen hergestellt sein können, entsprechend den Anforderungen, sei es aus rostendem oder rostfreiem Stahl oder aus einer Messing- oder Kupferlegierung, und weisen ein durchgehendes Innengewinde auf (nicht dargestellt). Ebenfalls denkbar ist, dass die Einsätze aus einer Leichtmetalllegierung sind da diese heutzutage ebenfalls hohe Festigkeitswerte erzielen.

Die Einsätze 10 sind axial durch die beiden Flanschanschlussscheiben 5 fixiert. Es ist vorteilhaft, wenn dazu die Innenseiten der Flanschanschlussscheiben 5 verschiedene Dicken und die Einsätze 10 unterschiedlich grosse Aussendurchmesser aufweisen. Als vorteilhaft hat sich gezeigt, wenn die Einsätze 10 stirnseitig einen geringeren Aussendurchmesser als in der Mitte aufweisen. Dadurch wird erreicht, dass die Einsätze 10 eine möglichst lange Bauform aufweise ohne das Gehäuse 2 mit allzu dünnen Flanschanschlussscheiben 5 zu schwächen und um ein möglichst langes Innengewinde zu erzielen. Durch den zurückversetzten grösseren Durchmesser in der Mitte der Einsätze 10, fällt die Dicke der Flanschanschlussscheiben 5 bereichsweise breiter aus, so dass die Flanschanschlussscheiben 5 eine genügend hohe Festigkeit erzielen und dennoch möglichst dünnwandig ausgebildet sind. Dies ist gut aus Fig. 3 zu entnehmen in der ein Einsatz 10 mit der Schulterfläche 19 an der Innenseite der Flanschanschlussscheibe 5 anliegt.

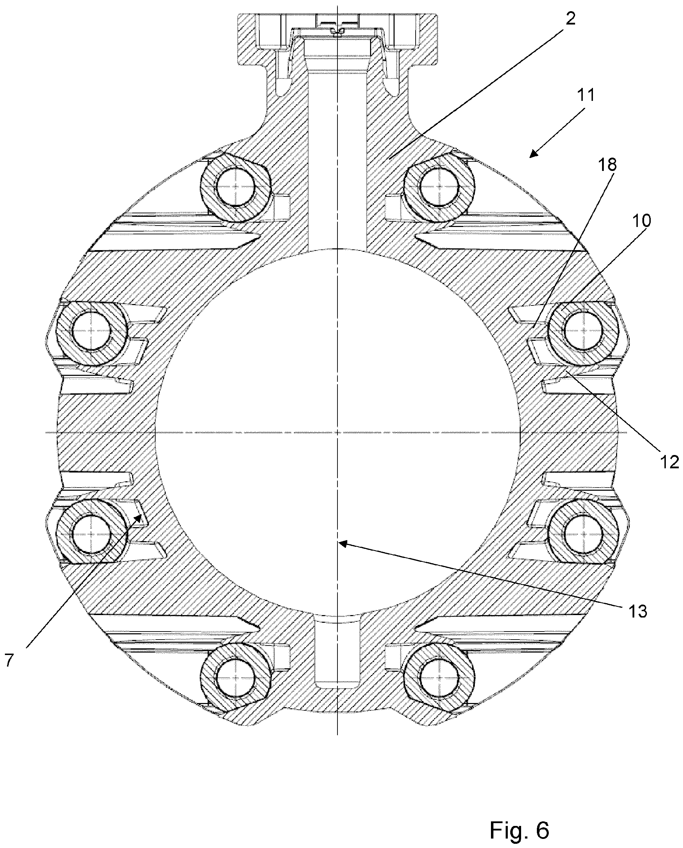

Die Einsätze 10 lassen sich auch nach der Montage im Gehäuse 2 wieder entfernen in dem sie aus der Aufnahmeöffnung 11 über den Aussenumfang herausgenommen werden. Die Aufnahmeöffnungen 11 erstrecken sich vom Aussenumfang des Gehäuses 2 in Richtung vertikaler Mittelachse 13 und sind endende Aufnahmetaschen ausgebildet, wie das gut in Fig. 6 ersichtlich ist. Die Aufnahmeöffnungen 11 verlaufen vorzugsweise rechtwinklig zur vertikalen Mittelachse 13, können durchaus aber auch schräg angeordnet sein. Um die Einsätze 10 korrekt zu positionieren ist am Aussendurchmesser 7 des Ringkörpers 4 vorzugsweise jeweils ein Distanzelement 18 angeordnet.

Damit die Einsätze 10 gut fixiert aber wieder lösbar in den Aufnahmeöffnungen angeordnet sind, ist in den die Aufnahmeöffnungen 11 vorzugsweise ein Halteelement 12 angeordnet, wobei das Halteelement 12 vorzugsweise als flexibler Schnapphaken ausgebildet ist und beim Einführen des Einsatzes 10 in die Aufnahmeöffnung 11 eingeklemmt bzw. eingespannt wird. Als vorteilhaft hat sich auch gezeigt, wenn der Einsatz 10 jeweils eine Verdrehsicherung 15 aufweist, dadurch wird verhindert, dass der Einsatz 10 sich beim Anziehen oder Lösen der Befestigungsmittel 17 rotiert. Vorzugsweise ist diese Verdrehsicherung 15 als gerade Fläche am Aussendurchmesser des Einsatzes 10 ausgebildet, der dann mit der Verrippung der Verstärkungsstruktur 9 korrespondiert oder einem dafür ausgebildeten Steg 21 und das Rotieren hemmt. Das Absperrgehäuse 1 ist entlang seiner vertikalen Mittelachse 13 spiegelsymmetrisch aufgebaut, dies ermöglicht den Einbau des Absperrgehäuses 1 bzw. einer Absperrklappe in beide Richtungen. Der Installateur braucht sich also nicht um die Einbaurichtung zu kümmern. Dies wird auch dadurch erreicht, dass die Einsätze axial zwischen den Flanschanschlussscheiben 5 fixiert sind.

Die Einsätze 10 weisen ein durchgehendes Innengewinde auf um ebenfalls zu ermöglichen, dass die Absperrklappe von beiden Seiten montiert werden kann. Es ist vorteilhaft, wenn entlang des Umfangs vier bis 20 Einsätze angeordnet sind, abhängig vom Rohrdurchmesser.

### Bezugszeichenliste

- 1: Absperrklappengehäuse
- 2: Gehäuse
- 3: Schliesselement
- 4: Ringkörper
- 5: Flanschanschlussscheibe
- 6: Innendurchmesser Ringkörper
- 7: Aussendurchmesser / Aussenumfang Ringkörper
- 8: Aussendurchmesser Flanschanschlussscheiben
- 9: Verstärkungsstruktur
- 10: Einsatz
- 11: Aufnahmeöffnung
- 12: Halteelement / Schnapphaken
- 13: Vertikale Mittelachse
- 14: Durchgangsbohrungen
- 15: Verdrehsicherung
- 16: Rohrflansch
- 17: Befestigungsmittel
- 18: Distanzelement
- 19: Schulterfläche
- 20: Manschette
- 21: Steg

## Patentansprüche

1. Absperrklappengehäuse (1) für eine Absperrklappe mit einem drehbar im Gehäuse (2) gelagerten Schliesselement (3), beinhaltend ein einteilig ausgebildetes Gehäuse (2) aus Kunststoff, wobei das Gehäuse (2) einen Ringkörper (4), zwei stirnseitig angeordnete Flanschanschlussscheiben (5) und eine Verstärkungsstruktur (11) aufweist, wobei der Ringkörper (4) einen, eine Dichtpartie bildenden Innendurchmesser (6) und einen Aussendurchmesser (7) aufweist, wobei der Aussendurchmesser (7) des Ringköpers (4) kleiner ist als der Aussendurchmesser (8) der Flanschanschlussscheiben (5), wobei die Verstärkungsstruktur (9) am Aussendurchmesser (8) des Ringkörpers (4) und zwischen den beiden Flanschanschlussscheiben (5) angeordnet ist, und metallische Einsätze (10), wobei die Einsätze (10) zwischen den Flanschanschlussscheiben (5) entlang des Aussenumfangs (7) des Ringkörpers (4) angeordnet sind wobei im Gehäuse (2) zwischen den beiden Flanschanschlussscheiben (5) und zwischen der Verstärkungsstruktur (9) Aufnahmeöffnungen (11) angeordnet sind, **dadurch gekennzeichnet, dass** die Aufnahmeöffnungen vom Aussenumfang in Richtung vertikale Mittelachse (13) gerichtet sind, in die die Einsätze (10) ins Gehäuse (2) einsetzbar sind, wobei die Einsätze (10) in den Aufnahmeöffnungen (11) formschlüssig angeordnet sind.

2. Absperrklappengehäuse (1) nach Anspruch 1, **dadurch gekennzeichnet, dass** die Einsätze (10) beidseitig axial im Gehäuse (2) zwischen den beiden Flanschanschlussscheiben (5) unverschiebbar und in Richtung des Aussenumfangswieder lösbar angeordnet sind.

3. Absperrklappengehäuse (1) nach einem der Ansprüche 1 oder 2, **dadurch gekennzeichnet, dass** in der Aufnahmeöffnung (11) zur Fixierung des Einsatzes (10) ein Halteelement (12) angeordnet ist.

4. Absperrklappengehäuse (1) nach Anspruch 3, **dadurch gekennzeichnet, dass** das Halteelement (12) als flexibler Schnapphaken ausgebildet ist.

5. Absperrklappengehäuse (1) nach einem der Ansprüche 1 bis 4, **dadurch gekennzeichnet, dass** das Absperrklappengehäuse (1) entlang der vertikalen Mittelachse (13) spiegelsymmetrisch ausgebildet ist.

6. Absperrklappengehäuse (1) nach einem der Ansprüche 1 bis 5, **dadurch gekennzeichnet, dass** mindestens vier Einsätze (10) im Gehäuse angeordnet sind, vorzugsweise sind vier bis 20 Einsätze (10) im Gehäuse angeordnet.

7. Absperrklappengehäuse (1) nach einem der Ansprüche 1 bis 6, **dadurch gekennzeichnet, dass** der Einsatz (10) ein Innengewinde aufweist, vorzugsweise ein durchgehendes Innengewinde.

8. Absperrklappengehäuse (1) nach einem der Ansprüche 1 bis 7, **dadurch gekennzeichnet, dass** der Einsatz (10) unterschiedliche Aussendurchmesser aufweist, wobei die Aussendurchmesseränderung über Abstufungen erfolgt.

9. Absperrklappengehäuse (1) nach einem der Ansprüche 1 bis 8, **dadurch gekennzeichnet, dass** der Einsatz (10) zu den Stirnseiten hin geringere Aussendurchmesser als in der Mitte aufweist.

10. Absperrklappengehäuse (1) nach einem der Ansprüche 1 bis 9, **dadurch gekennzeichnet, dass** der Einsatz (10) eine Verdrehsicherung (15) aufweist.

11. Absperrklappengehäuse (1) nach einem der Ansprüche 1 bis 10, **dadurch gekennzeichnet, dass** die Einsätze (10) regelmässig entlang des Aussendurchmessers (7) des Ringkörpers (4) angeordnet sind.

12. Absperrklappengehäuse (1) nach einem der Ansprüche 1 bis 11, **dadurch gekennzeichnet, dass** das Absperrklappengehäuse (1) einbaurichtungsunabhängig und als Zwischen- und Endeinbauteil installierbar ist.

13. Verwendung eines Absperrklappengehäuses (1) nach einem der Ansprüche 1 bis 12, **dadurch gekennzeichnet, dass** das Absperrklappengehäuse (1) einbaurichtungsunabhängig und in einer Absperrklappe für den Zwischen- wie auch den Endeinbau installiert wird.

## Claims

1. Butterfly valve housing (1) for a butterfly valve having a closure element (3) which is rotatably supported in the housing (2), containing an integral housing (2) made of plastics material, wherein the housing (2) has an annular member (4), two flange connection plates (5) which are arranged at the end face and a reinforcement structure (11), wherein the annular member (4) has an inner diameter (6) which forms a sealing portion and an outer diameter (7), wherein the outer diameter (7) of the annular member (4) is smaller than the outer diameter (8) of the flange connection plates (5), wherein the reinforcement structure (9) is arranged on the outer diameter (8) of the annular member (4) and between the two flange connection plates (5), and metal inserts (10), wherein the inserts (10) are arranged between the flange connection plates (5) along the outer circumference (7) of the annular member (4), wherein receiving openings (11) are arranged in the housing (2) between the two flange connection plates (5) and between the reinforcement structure (9), **characterized in that** the receiving openings are directed from the outer circumference in the direction of the vertical centre axis (13) in which the inserts (10) can be inserted into the housing (2), wherein the inserts (10) are arranged in a positive-locking manner in the receiving openings (11).

2. Butterfly valve housing (1) according to Claim 1, **characterized in that** the inserts (10) are arranged at both sides axially in the housing (2) between the two flange connection plates (5) in a non-displaceable manner and so as to be able to be released again in the direction of the outer circumference.

3. Butterfly valve housing (1) according to either Claim 1 or Claim 2, **characterized in that** a retention element (12) is arranged in the receiving opening (11) in order to fix the insert (10).

4. Butterfly valve housing (1) according to Claim 3, **characterized in that** the retention element (12) is in the form of a flexible snap-fit hook.

5. Butterfly valve housing (1) according to any one of Claims 1 to 4, **characterized in that** the butterfly valve housing (1) is configured in a mirror-symmetrical manner along the vertical centre axis (13).

6. Butterfly valve housing (1) according to any one of Claims 1 to 5, **characterized in that** at least four inserts (10) are arranged in the housing, preferably from four to 20 inserts (10) are arranged in the housing.

7. Butterfly valve housing (1) according to any one of Claims 1 to 6, **characterized in that** the insert (10) has an inner thread, preferably a continuous inner thread.

8. Butterfly valve housing (1) according to any one of Claims 1 to 7, **characterized in that** the insert (10) has different outer diameters, wherein the outer diameter change is carried out by means of gradations.

9. Butterfly valve housing (1) according to any one of Claims 1 to 8, **characterized in that** the insert (10) has a smaller outer diameter in the direction towards the end faces than at the centre.

10. Butterfly valve housing (1) according to any one of Claims 1 to 9, **characterized in that** the insert (10) has a torsion prevention means (15).

11. Butterfly valve housing (1) according to any one of Claims 1 to 10, **characterized in that** the inserts (10) are arranged in a regular manner along the outer diameter (7) of the annular member (4).

12. Butterfly valve housing (1) according to any one of Claims 1 to 11, **characterized in that** the butterfly valve housing (1) can be installed independently of the installation direction and as an intermediate and end installation component.

13. Use of a butterfly valve housing (1) according to any one of Claims 1 to 12, **characterized in that** the butterfly valve housing (1) is installed independently of the installation direction and in a butterfly valve for intermediate and also end installation.

## Revendications

1. Boîtier de clapet d'arrêt (1) pour un clapet d'arrêt avec un élément de fermeture (3) monté de manière rotative dans le boîtier (2), contenant un boîtier (2) en matière plastique réalisé d'une seule pièce, le boîtier (2) présentant un corps annulaire (4), deux disques de raccordement à bride (5) agencés du côté frontal et une structure de renforcement (11), le corps annulaire (4) présentant un diamètre intérieur (6) formant une partie d'étanchéité et un diamètre extérieur (7), le diamètre extérieur (7) du corps annulaire (4) étant plus petit que le diamètre extérieur (8) des disques de raccordement à bride (5), la structure de renforcement (9) étant agencée sur le diamètre extérieur (8) du corps annulaire (4) et entre les deux disques de raccordement à bride (5), et des inserts métalliques (10), les inserts (10) étant agencés entre les disques de raccordement à bride (5) le long de la périphérie extérieure (7) du corps annulaire (4), des ouvertures de réception (11) étant agencées dans le boîtier (2) entre les deux disques de raccordement à bride (5) et entre la structure de renforcement (9), **caractérisé en ce que** les ouvertures de réception sont orientées de la périphérie extérieure en direction de l'axe central vertical (13), dans lequel les inserts (10) peuvent être insérés dans le boîtier (2), les inserts (10) étant agencés par complémentarité de forme dans les ouvertures de réception (11).

2. Boîtier de clapet d'arrêt (1) selon la revendication 1, **caractérisé en ce que** les inserts (10) sont agencés des deux côtés axialement dans le boîtier (2) entre les deux disques de raccordement à bride (5) de manière à ne pas pouvoir être déplacés et à pouvoir être libérés dans la direction de la périphérie extérieure.

3. Boîtier de clapet d'arrêt (1) selon l'une quelconque des revendications 1 ou 2, **caractérisé en ce qu'**un élément de retenue (12) est agencé dans l'ouverture de réception (11) pour fixer l'insert (10).

4. Boîtier de clapet d'arrêt (1) selon la revendication 3, **caractérisé en ce que** l'élément de retenue (12) est réalisé sous forme de crochet à encliquetage flexible.

5. Boîtier de clapet d'arrêt (1) selon l'une quelconque des revendications 1 à 4, **caractérisé en ce que** le boîtier de clapet d'arrêt (1) est réalisé sous forme symétrique le long de l'axe central vertical (13).

6. Boîtier de clapet d'arrêt (1) selon l'une quelconque des revendications 1 à 5, **caractérisé en ce qu'**au moins quatre inserts (10) sont agencés dans le boîtier, de préférence de quatre à 20 inserts (10) sont agencés dans le boîtier.

7. Boîtier de clapet d'arrêt (1) selon l'une quelconque des revendications 1 à 6, **caractérisé en ce que** l'insert (10) présente un filetage intérieur, de préférence un filetage intérieur continu.

8. Boîtier de clapet d'arrêt (1) selon l'une quelconque des revendications 1 à 7, **caractérisé en ce que** l'insert (10) présente différents diamètres extérieurs, la variation du diamètre extérieur s'effectuant par paliers.

9. Boîtier de clapet d'arrêt (1) selon l'une quelconque des revendications 1 à 8, **caractérisé en ce que** l'insert (10) présente des diamètres extérieurs plus petits vers les côtés frontaux qu'au centre.

10. Boîtier de clapet d'arrêt (1) selon l'une quelconque des revendications 1 à 9, **caractérisé en ce que** l'insert (10) présente un dispositif anti-rotation (15).

11. Boîtier de clapet d'arrêt (1) selon l'une quelconque des revendications 1 à 10, **caractérisé en ce que** les inserts (10) sont agencés régulièrement le long du diamètre extérieur (7) du corps annulaire (4).

12. Boîtier de clapet d'arrêt (1) selon l'une quelconque des revendications 1 à 11, **caractérisé en ce que** le boîtier de clapet d'arrêt (1) est indépendant de la direction de montage et peut être installé en tant que composant de montage intermédiaire et final.

13. Utilisation d'un boîtier de clapet d'arrêt (1) selon l'une quelconque des revendications 1 à 12, **caractérisée en ce que** le boîtier de clapet d'arrêt (1) est installé indépendamment de la direction de montage et dans un clapet d'arrêt pour un montage intermédiaire ainsi que pour un montage final.
